(19) Europäisches Patentamt / European Patent Office / Office européen des brevets

(11) **EP 2 889 648 B1**

(12) **FASCICULE DE BREVET EUROPEEN**

(45) Date de publication et mention
de la délivrance du brevet:
**03.08.2016 Bulletin 2016/31**

(51) Int Cl.:
***G01V 3/08*** *(2006.01)*     *G06F 3/046* *(2006.01)*

(21) Numéro de dépôt: **14197655.5**

(22) Date de dépôt: **12.12.2014**

(54) **Procédé de localisation d'ustensiles mobiles presentés devant un réseau de magnétomètres**

Verfahren zur Lokalisierung von mobilen Geräten vor einem Netz von Magnetometern

Method for locating mobile utensils presented before an array of magnetometers

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.12.2013 FR 1362731**

(43) Date de publication de la demande:
**01.07.2015 Bulletin 2015/27**

(73) Titulaire: **Commissariat à l'Énergie Atomique
et aux Énergies Alternatives
75015 Paris (FR)**

(72) Inventeurs:
- **Hautson, Tristan
  38600 FONTAINE (FR)**
- **Jobert, Timothée
  38000 GRENOBLE (FR)**
- **Vallejo, Jean-Luc
  38000 GRENOBLE (FR)**

(74) Mandataire: **GIE Innovation Competence Group
310, avenue Berthelot
69372 Lyon Cedex 08 (FR)**

(56) Documents cités:
**US-A- 5 731 996    US-A1- 2012 249 634
US-B1- 6 263 230    US-B1- 7 932 718**

EP 2 889 648 B1

**Description**

L'invention concerne un procédé et un dispositif de localisation d'ustensiles mobiles présentés devant un réseau de magnétomètres. L'invention concerne également un support d'enregistrement d'informations pour la mise en oeuvre de ce procédé.

Les demandes de brevet FR2 988 862 et FR2 988 874 divulguent des procédés de localisation d'ustensiles mobiles présentés devant un réseau de magnétomètres comportant N magnétomètres tri-axes reliés mécaniquement les uns aux autres sans aucun degré de liberté pour conserver une distance connue entre chacun des magnétomètres, chaque ustensile comportant au moins un objet magnétique, où N est un nombre entier supérieur ou égal à cinq. Ces procédés connus comportent :

a) la mesure par chacun des magnétomètres de l'amplitude du champ magnétique le long de chacun de ses axes de mesure,

b) l'estimation à partir des mesures des magnétomètres, des valeurs de plusieurs variables en résolvant un système actuel d'équations reliant ces variables à chaque mesure d'un magnétomètre tri-axes du réseau, ces variables correspondant aux positions, orientations et amplitudes des moments magnétiques des objets magnétiques des ustensiles à localiser,

- l'itération des étapes a) et b) à des instants successifs dans le temps pour obtenir les valeurs estimées de chaque variable à ces différents instants successifs.

Ces procédés fonctionnent particulièrement bien. En particulier, ces procédés sont capables de localiser de nombreux objets magnétiques mobiles différents et donc de nombreux ustensiles. De plus, ils sont aussi capables de localiser simultanément plusieurs ustensiles mobiles mécaniquement indépendants les uns des autres. A cause de ces capacités, on dit que ces procédés sont « flexibles ».

Pour être capable de localiser simultanément de nombreux ustensiles mobiles, le système d'équations comporte de nombreuses variables à estimer. Typiquement, pour chaque objet magnétique de l'ustensile à localiser, le système d'équations comporte six variables à estimer.

L'estimation des valeurs des nombreuses variables de ce système nécessite l'exécution d'un grand nombre d'opérations par le calculateur car ce système d'équations est non linéaire. Or, plus le nombre d'opérations à exécuter par le calculateur est important, plus la consommation électrique de ce calculateur augmente.

De l'état de la technique est également connu de :

- US7932718B1 ;
- US5731996A ;
- US2012249634A1 ;
- US6263230B1.

L'invention vise à réduire la consommation électrique du calculateur qui exécute un tel procédé de localisation sans réduire la flexibilité du procédé.

Elle a donc pour objet un tel procédé conforme à la revendication 1.

Le procédé ci-dessus permet d'éviter de déclencher des exécutions inutiles de l'étape b), c'est-à-dire des exécutions de l'étape b) alors qu'aucun ustensile n'est déplacé. Il permet donc de réduire la consommation électrique du calculateur exécutant ce procédé. Ce procédé est aussi plus rapide à exécuter.

De plus, il permet de détecter qu'une exécution de l'étape b) est nécessaire sans avoir à résoudre après chaque itération de l'étape a) le système actuel d'équations, par exemple, pour déterminer une augmentation de l'erreur d'estimation.

En effet, l'amplitude de la perturbation se calcule directement à partir des valeurs établies pour les mesures des magnétomètres lorsque les ustensiles sont immobiles et des mesures réalisées lors de la dernière l'exécution de l'étape a). Il n'est donc pas nécessaire d'exécuter l'étape b) pour s'apercevoir que son exécution était inutile. Cela réduit également le nombre d'opérations réalisées par le calculateur et donc sa consommation électrique lorsqu'il exécute ce procédé.

Les modes de réalisation de ce procédé peuvent comporter une ou plusieurs des caractéristiques des revendications dépendantes.

Ces modes de réalisation du procédé présentent en outre les avantages suivants :

- calculer le barycentre de la perturbation permet d'identifier simplement, sans exécution de l'étape b), l'ustensile qui a été déplacé parmi l'ensemble des ustensiles contenus dans la liste d'ustensiles immobiles ;

- déduire la présence d'un nouvel ustensile à partir de la distance qui sépare les ustensiles immobiles du barycentre de la perturbation permet d'adapter automatiquement le système d'équations en réponse à l'ajout d'un nouvel ustensile sans avoir à exécuter l'étape b) ;
- identifier l'ustensile qui a été déplacé parmi ceux présents dans la liste d'ustensiles immobiles à l'aide d'une corrélation entre le champ magnétique généré par les objets magnétiques de cet ustensile et la perturbation permet d'identifier simplement, sans exécuter l'étape b), l'ustensile qui a été déplacé ;
- déduire du fait que la corrélation entre le champ magnétique généré par les objets magnétiques des ustensiles et la perturbation actuelle sont toutes inférieures à un seuil prédéterminé qu'un nouvel ustensile a été ajouté, permet d'adapter dynamiquement et automatiquement le système d'équations en réponse à l'ajout d'un nouvel ustensile ;
- remplacer les variables du système actuel d'équations codant les positions, orientations et amplitudes des objets magnétiques des ustensiles immobiles par des constantes puis, à chaque fois qu'un ustensile est de nouveau déplacé, réaliser l'opération inverse permet d'adapter automatiquement le système d'équations en fonction du déplacement des ustensiles réalisés et donc d'augmenter la précision de la localisation de l'ustensile déplacé ;
- supprimer du système d'équations les variables codant la position, l'orientation et l'amplitude des objets magnétiques des ustensiles qui sont éloignés d'une distance prédéterminée des magnétomètres permet de simplifier le système d'équations au fur et à mesure que des ustensiles sont retirés.

L'invention a également pour objet un support d'enregistrement d'informations comportant des instructions pour l'exécution du procédé ci-dessus, lorsque ces instructions sont exécutées par un calculateur électronique.

Enfin, l'invention a également pour objet un dispositif de localisation d'ustensiles mobiles conforme à la revendication 9.

L'invention sera mieux comprise à la lecture de la description qui va suivre, donnée uniquement à titre d'exemple non limitatif et faite en se référant aux dessins, sur lesquels :

- la figure 1 est une illustration schématique d'une interface homme-machine permettant de commander un appareil électrique.
- la figure 2 est une illustration partielle, en vue de dessus, d'un réseau de magnétomètres mis en oeuvre dans l'interface homme-machine de la figure 1 ;
- la figure 3 est une illustration schématique d'une base de données utilisée dans l'interface de la figure 1 ;
- la figure 4 est un organigramme d'un procédé de commande d'un appareil électrique à l'aide de l'interface homme-machine de la figure 1 ;
- la figure 5 est un organigramme partiel d'un autre procédé de commande d'un appareil électrique à l'aide de l'interface homme-machine de la figure 1.

Dans ces figures, les mêmes références sont utilisées pour désigner les mêmes éléments.

Dans la suite de cette description, les caractéristiques et fonctions bien connues de l'homme du métier ne sont pas décrites en détails.

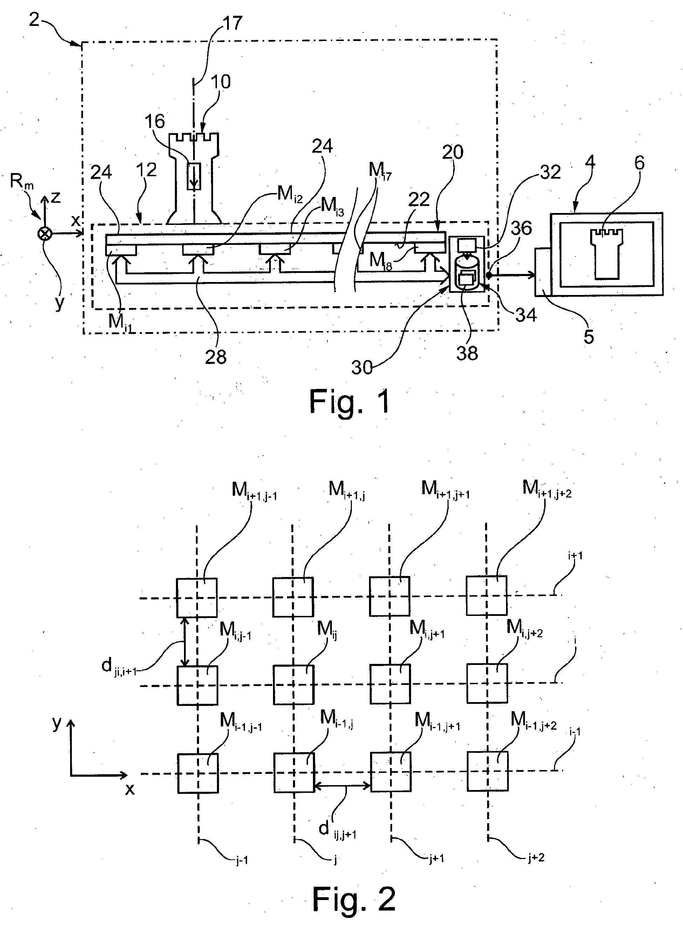

La figure 1 représente une interface homme-machine 2 permettant de commander un appareil électrique 4. Ici, l'appareil électrique comporte un écran et une unité 5 de commande capable de commander l'affichage d'une image sur cet écran.

Par la suite, le fonctionnement de l'interface 2 est illustré dans le cas où l'unité 5 est une console de jeux vidéo. Par exemple, l'unité 5 commande le déplacement de pions sur l'écran. Pour simplifier l'illustration, seul un pion 6 est représenté. Toutefois, l'interface 2 est utilisable dans de nombreuses autres applications comme cela est décrit à la fin de cette description.

L'interface 2 comporte plusieurs ustensiles déplaçables directement à la main par un être humain, dénommé « utilisateur » par la suite. Chacun de ces ustensiles comporte au moins un objet magnétique. Ici chaque objet magnétique est un aimant permanent. Pour simplifier la figure 1, seul un ustensile 10 est représenté sur cette figure.

Chaque ustensile est librement déplaçable, directement par la main de l'utilisateur, dans un repère orthogonal Rm fixé sans aucun degré de liberté à un dispositif 12. Ici, les directions X et Y du repère Rm sont horizontales et la direction Z est verticale. A cet effet, chaque ustensile pèse moins d'un kilo et, de préférence, moins de 200g ou 100g. Les dimensions de chaque ustensile sont suffisamment réduites pour qu'il puisse être saisi et déplacé par une seule main de l'utilisateur.

Dans ce mode de réalisation, l'ustensile 10 comprend un corps et un aimant permanent 16. Par exemple, le corps s'étend le long d'un axe longitudinal 17. Le corps présente dans sa partie inférieure un pied apte à immobiliser, dans le repère Rm, le corps lorsque ce pied repose sur une face horizontale. Ici l'ustensile 10 est un pion d'un jeu d'échec. A titre d'illustration, le corps a la forme d'une tour facilement saisissable par l'utilisateur.

Par exemple, le corps est entièrement réalisé dans un matériau non-magnétique, c'est-à-dire un matériau ne présentant pas de propriété magnétique mesurable par le dispositif 12. Ce matériau est par exemple du plastique.

L'ustensile 10 est localisé, dans le repère Rm, à partir de la position et l'orientation de l'aimant 16. A cet effet, l'aimant 16 est fixé sans aucun degré de liberté à l'ustensile 10. La direction du moment magnétique de l'aimant 16 est ici confondue avec l'axe longitudinal 17 du corps. Sur la figure 1 et les suivantes, la direction du moment magnétique d'un aimant est représentée par une flèche.

L'aimant 16 présente un moment magnétique non nul même en absence de champ magnétique extérieur. Typiquement, dans cette description, le champ magnétique coercitif de chaque aimant est supérieur à 100 A.m$^{-1}$ ou 500 A.m$^{-1}$. Par exemple, il est réalisé en matériau ferro- ou ferrimagnétique. La puissance de chaque aimant permanent est typiquement supérieure à 0,01 A.m$^2$ ou 0,1 A.m$^2$.

La plus grande longueur de cet aimant est notée L par la suite.

Pour simplifier la description, on suppose également que la structure des autres ustensiles utilisables dans l'interface 2 est identique à celle de l'ustensile 10 ou ne diffère de celle de l'ustensile 10 que par la forme du corps.

Le dispositif 12 permet de localiser un ou plusieurs aimants dans le repère Rm. Par localisation d'un aimant, on entend ici la détermination de la position et de l'orientation de l'aimant 16 dans le repère Rm. La position est définie sans ambiguïté par les valeurs de trois variables, par exemple les coordonnées x, y et z dans le repère Rm. Plus précisément, dans le cas d'un aimant, les variables x, y et z sont les coordonnées du centre géométrique de l'aimant. Le centre de géométrie d'un objet est le barycentre de l'ensemble des points de cet objet en affectant le même poids à chacun de ces points. L'orientation du moment magnétique d'un aimant est définie dans le repère Rm par les valeurs de deux variables $\theta_y$ et $\theta_z$. Ici, les variables $\theta_y$ et $\theta_z$ sont les angles du moment magnétique de l'aimant, respectivement, par rapport aux axes Y et Z du repère Rm. Le dispositif 12 détermine également un sixième variable A. La variable A est l'amplitude du moment magnétique de l'aimant.

Le dispositif 12 comporte à cet effet un réseau de N magnétomètres tri-axes $M_{ij}$. Sur la figure 1, les traits ondulés verticaux indiquent qu'une partie du dispositif 12 n'a pas été représentée.

Typiquement, N est supérieur à cinq et, de préférence, supérieur à seize ou trente-deux. Ici, N est supérieur ou égal à soixante-quatre.

Dans ce mode de réalisation, les magnétomètres $M_{ij}$ sont alignés en lignes et en colonnes pour former une matrice. Ici, cette matrice comporte huit lignes et huit colonnes. Les indices i et j identifient, respectivement, la ligne et la colonne de cette matrice à l'intersection de laquelle se trouve le magnétomètre $M_{ij}$. Sur la figure 1, seuls les magnétomètres $M_{i1}$, $M_{i2}$, $M_{i3}$, $M_{i4}$ et $M_{i8}$ d'une ligne i sont visibles. La position des magnétomètres $M_{ij}$ les uns par rapport aux autres est décrite plus en détail en référence à la figure 2.

Chaque magnétomètre $M_{ij}$ est fixé sans aucun degré de liberté aux autres magnétomètres. A cet effet, les magnétomètres $M_{ij}$ sont fixés sans aucun degré de liberté sur une face arrière 22 d'une plaque rigide 20. Cette plaque rigide présente une face avant 24 tournée vers l'aimant 16. La plaque 20 est réalisée dans un matériau non magnétique rigide. Par exemple, la plaque 20 est en verre.

Chaque magnétomètre $M_{ij}$ mesure la direction et l'intensité du champ magnétique généré par les aimants présents devant la face 24. Pour cela, chaque magnétomètre $M_{ij}$ mesure la norme de la projection orthogonale du champ magnétique au niveau de ce magnétomètre $M_{ij}$ sur trois axes de mesure de ce magnétomètre. Ici, ces trois axes de mesure sont orthogonaux entre eux. Par exemple, les axes de mesure de chacun des magnétomètres $M_{ij}$ sont, respectivement, parallèles aux axes X, Y et Z du repère. La sensibilité du magnétomètre $Mi_j$ est par exemple de $4*10^{-7}$T.

Chaque magnétomètre $M_{ij}$ est raccordé par l'intermédiaire d'un bus 28 de transmission d'informations à une unité de traitement 30.

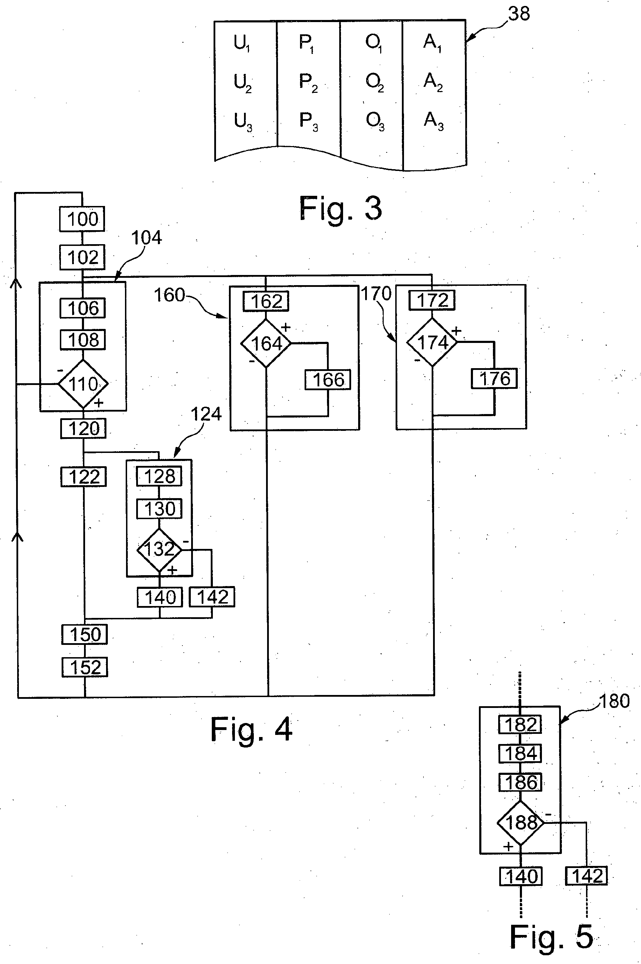

L'unité de traitement 30 est capable, pour chaque aimant, de le localiser dans le repère Rm et d'estimer l'amplitude de son moment magnétique à partir des mesures des magnétomètres $M_{ij}$. A cet effet, l'unité 30 comporte un calculateur électronique 32 programmable apte à exécuter des instructions enregistrées sur un support d'enregistrement d'informations. L'unité 30 comporte donc aussi une mémoire 34 contenant les instructions nécessaires pour l'exécution par le calculateur 32 du procédé de la figure 4 ou 5. L'unité 30 implémente un modèle mathématique $M_P$ associant chaque mesure d'un magnétomètre $M_{ij}$ aux positions, orientations et aux amplitudes des moments magnétiques de P objets magnétiques dans le repère Rm. Chaque modèle $M_P$ se présente sous la forme d'un système d'équations dans lequel un premier jeu de variables représente les positions et orientations des P objets magnétiques ainsi que les amplitudes des moments magnétiques de ces objets. Un second jeu de variables représente les mesures des magnétomètres $M_{ij}$. Pour obtenir, les positions, orientations et amplitudes des moments magnétiques des P objets magnétiques, les variables du premier jeu sont les inconnues et les valeurs des variables du second jeu sont connues. A l'inverse, pour obtenir une estimations des valeurs mesurées par les magnétomètres $M_{ij}$, les variables du premier jeu sont connues et les valeurs des variables du second jeu sont les inconnues. Chaque modèle est typiquement construit à partir des équations physiques du magnétisme. Chaque modèle est paramétré par les distances connues entres les magnétomètres $M_{ij}$. Ici, les objets magnétiques sont les aimants permanents. Par exemple, pour construire ce modèle, chaque aimant permanent est approximé par un dipôle magnétique. Cette approximation n'introduit que très peu d'erreurs si la distance entre l'aimant permanent et le magnétomètre $M_{ij}$ est supérieure à 2L et, de préférence, supérieure à 3L, où L est la plus grande dimension de l'aimant permanent. Typiquement, L est inférieur à 20 cm et, de préférence, inférieur à 10 ou 5cm ou 1 cm.

Ici, le modèle $M_P$ est non linéaire. Par conséquent, pour localiser les aimants permanents, l'unité 30 le résout en mettant en oeuvre un algorithme d'estimation de sa solution. Par exemple, l'algorithme utilisé est un filtre de Kalman d'ensemble plus connu sous le terme anglais de « Unscented Kalman Filter ». On notera aussi que pour estimer les valeurs mesurées par les magnétomètres à partir de positions, orientations et amplitudes connus d'aimants permanents et à l'aide du modèle $M_P$, il n'est pas nécessaire de mettre en oeuvre de tels algorithmes d'estimation de la solution. Il suffit de remplacer les variables codant les positions, orientations et amplitudes par leurs valeurs respectives.

Étant donné que chaque objet magnétique est caractérisé par trois variables pour connaître sa position, deux variables pour connaître son orientation et une variable pour connaître l'amplitude de son moment magnétique, le nombre maximum d'objets magnétiques simultanément localisables par le réseau de N magnétomètres est inférieur à N/2. Dès lors, la valeur du nombre P est inférieure ou égale à N/2 et, de préférence, inférieure à N/5 ou N/10 ou N/20 pour avoir des mesures redondantes. La redondance des mesures permet d'améliorer la précision de la localisation des objets magnétiques.

De plus, dans ce mode de réalisation, on suppose qu'à chaque instant, il n'y a jamais plus d'un seul ustensile qui est déplacé. Par conséquent, à chaque instant il existe au plus un aimant permanent qui se déplace. Dans ces conditions, initialement, l'unité 30 implémente le modèle $M_1$. Toutefois, dans cet exemple, les modèles $M_1$ jusqu'à $M_{32}$ sont aussi enregistrés dans la mémoire 34 pour estimer les mesures des magnétomètres $M_{ij}$.

L'unité 30 est également capable de transmettre une commande à l'appareil 4 par l'intermédiaire d'une interface 36 reliée à cet appareil 4.

La mémoire 34 comporté aussi une base 38 de données dans laquelle sont enregistrés les ustensiles immobiles et leurs positions respectives. Cette base 38 est décrite plus en détail en référence à la figure 3.

La figure 2 représente une partie des magnétomètres $M_{ij}$ du dispositif 12. Ces magnétomètres $M_{ij}$ sont alignés en lignes i parallèles à la direction X. Ces magnétomètres sont également alignés en colonnes j parallèles à la direction Y pour former une matrice. Les lignes i et les colonnes j sont disposées dans l'ordre des indices croissants.

Le centre du magnétomètre $M_{ij}$ se trouve à l'intersection de la ligne i et de la colonne j. Le centre du magnétomètre correspond au point où le champ magnétique est mesuré par ce magnétomètre. Ici, les indices i et j appartiennent à l'intervalle [1 ; 8].

Les centres de deux magnétomètres $M_{ij}$ et $M_{i,j+1}$ immédiatement consécutifs le long d'une ligne i sont séparés par une distance connue $d_{i,j,j+1}$. De façon similaire, le centre de deux magnétomètres $M_{ij}$ et $M_{i+1,j}$ immédiatement consécutifs le long d'une même colonne j sont séparés par une distance connue $d_{j,i,i+1}$.

Dans le cas particulier décrit ici, quelle que soit la ligne i, la distance $d_{i,j,j+1}$ est la même. Cette distance est donc notée $d_j$. De façon similaire, quelle que soit la colonne j, la distance $d_{j,i,i+1}$ entre deux magnétomètres est la même. Cette distance est donc notée $d_i$.

Ici, les distances $d_i$ et $d_j$ sont toutes les deux égales à d.

Typiquement, la distance d est inférieure, et de préférence deux fois inférieur, à la plus petite distance qui peut exister entre deux objets magnétiques simultanément présent devant la face 24 lors d'une utilisation normale de l'interface 2. Ici, la distance d est comprise entre 1 et 4 cm lorsque :

- la puissance de l'aimant permanent est de 0,5 A.m$^2$,
- la sensibilité des magnétomètres est de 4*10$^{-7}$T, et
- le nombre de magnétomètres $M_{ij}$ est de soixante-quatre.

La figure 3 présente plus en détail la base de données 38. Cette base de données 38 contient un identifiant $U_k$ pour chaque ustensile différent immobile dans le repère Rm. L'identifiant $U_k$ permet de distinguer cet ustensile de tous les autres ustensiles simultanément présents devant la face 24. A chaque identifiant $U_k$, la base de données 38 associe la position $P_k$ de son aimant permanent, l'orientation $O_k$ du moment magnétique de cet aimant permanent et l'amplitude $A_k$ du moment magnétique de cet aimant permanent. Pour simplifier l'illustration, seules trois lignes de la base de données 38, respectivement pour les identifiants $U_1$, $U_2$ et $U_3$, sont représentées. Par la suite, étant donné que cette base de données 38 contient la liste des ustensiles immobiles dans leur repère Rm, cette base de données 38 est également appelée liste des ustensiles immobiles.

Le fonctionnement de l'interface 2 va maintenant être décrit en référence au procédé de la figure 4.

Dans ce mode de réalisation, on suppose qu'initialement aucun ustensile n'est présent sur la face 24 du dispositif 12. Par conséquent, la base 38 est vide. Dans cette description, on considère également que le champ magnétique terrestre est négligeable dans les mesures des magnétomètres $M_{ij}$. Dans l'hypothèse où l'amplitude du champ magnétique terrestre ne serait pas négligeable, on considère alors par la suite que la mesure du champ magnétique terrestre est systématiquement déduite de la mesure actuelle des magnétomètres de sorte que seul l'écart entre ces deux mesures est pris en compte par le calculateur 32 lors de l'exécution du procédé suivant.

Lors d'une étape 100, le magnétomètre $M_{ij}$ mesure le champ magnétique présent.

Ensuite, lors d'une étape 102, le calculateur 32 acquiert les mesures des magnétomètres $M_{ij}$.

Lors d'une étape 104, le calculateur 32 détecte la présence et, en alternance, l'absence d'une perturbation magnétique.

Pour cela, lors d'une opération 106, le calculateur 32 établit la valeur qui serait mesurée par chaque magnétomètre $M_{ij}$ si le seul champ magnétique présent était le champ magnétique généré par les aimants permanents des ustensiles recensés dans la base 38. Ce champ magnétique est par la suite appelé « champ magnétique de références ».

Ici, le calculateur 32 calcule ces valeurs à partir des positions, orientations et amplitudes des moments magnétiques enregistrées pour chaque aimant permanent des ustensiles contenus dans la base 38.

Pour cela, le calculateur 32 sélectionne un modèle $M_P$ où P est égal au nombre d'aimants permanents dont les positions, orientations et amplitudes sont enregistrées dans la base 38. Ensuite, il remplace les variables codant les positions, orientations et amplitudes de chaque dipôle magnétique par les valeurs correspondantes contenues dans la base 38. De cette façon, le calculateur 32 obtient les valeurs que devraient mesurer les magnétomètres $M_{ij}$ si seuls les ustensiles immobiles étaient présents devant la face 24. Par la suite, les valeurs ainsi établies pour chaque axe de mesure de chaque magnétomètre $M_{ij}$ sont appelées « mesures de référence ».

Dans le cas où la base 38 est vide, les mesures de référence sont nulles, car le champ magnétique de référence est également nul.

Par « perturbation » on désigne ici l'ensemble des écarts, pour chaque axe de mesure de chaque magnétomètre $M_{ij}$, entre :

- la dernière mesure de référence établie lors de l'opération 106, et
- la dernière mesure acquise lors de l'étape 102.

Lors d'une opération 108, le calculateur 32 calcule l'amplitude de la perturbation à partir des écarts entre les mesures de référence établies lors de l'étape 106 et les mesures acquises lors de l'étape 102. Par exemple, l'amplitude $A_P$ de la perturbation est calculée à l'aide de la relation suivante : $A_P = \Sigma(m_{ijn} - m_{refijn})^2$, où :

- $m_{ijn}$ est la mesure du magnétomètre $M_{ij}$ sur son axe n de mesure,
- $m_{refijn}$ est la mesure de référence pour le même magnétomètre et sur le même axe de mesure établie lors de l'opération 106,
- l'indice n identifie l'axe de mesure dans la relation ci-dessus.

De plus, la somme ci-dessus est calculée pour i et j variant de 1 à N, et pour n variant de 1 à 3.

Lors d'une opération 110, le calculateur 32 compare l'amplitude $A_P$ calculée à un seuil $S_P$ prédéterminé. Si l'amplitude $A_P$ est inférieure ou égale au seuil $S_P$, alors aucune perturbation n'est détectée, et le procédé retourne à l'étape 100.

Dans le cas contraire, c'est-à-dire si l'amplitude $A_P$ est supérieure au seuil $S_P$, une perturbation est détectée, ce qui signifie qu'un ustensile a été ajouté ou déplacé par rapport à la situation précédente où tous les ustensiles étaient immobiles.

Dans ce cas, le procédé se poursuit par une étape 120 lors de laquelle le calculateur 32 calcule les coordonnées du barycentre $B_P$ de la perturbation. Plus précisément, lors de l'étape 120, le calculateur 32 calcule les coordonnées du barycentre de l'ensemble des points $P_{ij}$ en affectant à chaque point $P_{ij}$ un coefficient de pondération $C_{ij}$ fonction de l'écart entre les mesures de référence et les mesures acquises du magnétomètre $M_{ij}$. Les coordonnées du point $P_{ij}$ sont égales aux coordonnées du centre géométrique du magnétomètre $M_{ij}$. Le coefficient de pondération $C_{ij}$ est par exemple donné par la relation suivante : $C_{ij} = (m_{ij1} - m_{refi1})^2 + (m_{ij2} - m_{refij2})^2 + (m_{ij3} - m_{refij3})^2$

Lors d'une étape 122, si la base 38 est vide c'est-à-dire qu'elle ne contient actuellement aucun ustensile immobile, alors le calculateur 32 sélectionne automatiquement comme système actuel d'équations le système d'équations du modèle $M_1$.

A l'inverse, si la base 38 contient au moins un identifiant d'au moins un ustensile immobile, le calculateur 32 procède à une étape 124 d'identification de l'ustensile qui a été déplacé parmi l'ensemble des ustensiles identifiés par la base 38.

Pour cela, lors d'une opération 128, pour chaque ustensile identifié dans la base 38, le calculateur 32 calcule la distance $D_b$ entre la position de l'aimant permanent de cet ustensile enregistré dans la base 38 et les coordonnées du barycentre $B_P$.

Lors d'une opération 130, le calculateur sélectionne, dans la base 38, l'ustensile pour lequel la distance $D_b$ précédemment calculée est la plus petite.

Lors d'une opération 132, le calculateur 32 compare alors la distance $D_b$ calculée pour l'ustensile sélectionné à l'étape 130 à un seuil prédéterminé $S_b$. Si cette distance $D_b$ est inférieure au seuil $S_b$, le calculateur 32 identifie cet ustensile comme étant celui qui a été déplacé et qui a provoqué la perturbation. Dans ce cas, le procédé se poursuit par une étape 140.

Dans le cas contraire, c'est-à-dire si la distance $D_b$ est supérieure au seuil $S_b$, cela signifie qu'aucun des ustensiles identifiés dans la base 38 n'a été identifié comme étant celui qui a été déplacé pour créer la perturbation. Dans ce dernier cas, le procédé se poursuit par une étape 142.

Lors de l'étape 140, le calculateur 32 supprime dans la base 38 l'identifiant de l'ustensile identifié ainsi que toutes les données associées à cet ustensile identifié. Ensuite, il remplace dans le système actuel d'équations les valeurs numériques constantes qui codaient la position, l'orientation et l'amplitude du moment magnétique de l'aimant permanent de cet ustensile par des variables. On obtient alors un nouveau système d'équations. Ce nouveau système d'équations remplace le système actuel d'équations lors des itérations suivantes de l'étape 150.

Lors de l'étape 142, le calculateur 32 ajoute au système actuel d'équations de nouvelles équations contenant six nouvelles variables x, y, z, $\theta_y$, $\theta_z$ et A codant la position, l'orientation et l'amplitude du moment magnétique d'un aimant permanent d'un nouvel ustensile. Les équations ajoutées relient ces variables aux mesures réalisées par chaque magnétomètre $M_{ij}$. Par exemple, ces équations sont obtenues à partir de la relation suivante :

$$B(r,r') = (\mu_0/4\pi)[3{*}(r{-}r'){*}[m.(r{-}r')]/\,|\,r{-}r'\,|^5 - m/|\,r{-}r'\,|^3], \text{ où :}$$

- $\mu_0$ : la perméabilité magnétique du vide à $4\pi{*}10^{-7}$ H.m$^{-1}$;
- **m** : vecteur du moment magnétique de l'aimant permanent en A.m$^2$;
- **r'** : vecteur position de l'aimant dans le repère Rm;
- **r** : vecteur position du magnétomètre $M_{ij}$ dans le repère Rm;
- **(r-r')** : vecteur liant le centre de l'aimant au point de mesure ;
- B(**r,r'**) : vecteur du champ magnétique au niveau du magnétomètre $M_{ij}$ en Tesla;
- $|\,...\,|$ : fonction retournant la norme d'un vecteur ;
- « . » : fonction produit scalaire ;
- « * » : multiplication par un nombre réel.

A partir de cette relation et connaissant la position du magnétomètre $M_{ij}$ dans le repère Rm, on obtient trois équations reliant les variables x, y, z, $\theta_y$, $\theta_z$, A aux mesures, respectivement, sur les trois axes de mesure du magnétomètre $M_{ij}$.

Ainsi, à l'issue de l'étape 142, on obtient un nouveau système d'équations qui est utilisé à la place du système actuel d'équations lors des itérations suivantes de l'étape 150.

A l'issue des étapes 122 et 142, le calculateur 32 dispose d'un système d'équations, appelé système actuel d'équations, reliant les variables codant la position, l'orientation et l'amplitude du moment magnétique de l'aimant permanent qui se déplace aux mesures des magnétomètres.

Lors de l'étape 150, le calculateur 32 estime la position, l'orientation et l'amplitude du moment magnétique de l'aimant permanent de l'ustensile qui se déplace à l'aide de ce système actuel d'équations. Pour cela, il résout le système actuel d'équations en utilisant les dernières mesures acquises lors de l'étape 102. Par exemple, la solution de ce système actuel d'équations est estimée en utilisant un filtre de Kalman d'ensemble ou « unscented Karman filter » en anglais. Lors de l'étape 150, les valeurs des variables à estimer codant la position sont initialisées en les prenant égales aux coordonnées du barycentre $B_P$ calculées lors de l'étape 120. Ceci permet d'accélérer la convergence du procédé vers l'estimation des valeurs qui résolvent ce système actuel d'équations.

Ensuite, lors d'une étape 152, le calculateur 32 commande l'appareil 4 en fonction de la position, de l'orientation et de l'amplitude estimées lors de l'étape 150. Par exemple, cette position, cette orientation et cette amplitude estimées sont transmises à l'unité 5 qui commande en réponse un déplacement d'une représentation graphique de l'ustensile sur l'écran.

A l'issue de l'étape 152, le procédé retourne à l'étape 100.

En parallèle des étapes 104 à 152, lors d'une étape 160, le calculateur 32 détecte si un ustensile s'immobilise, c'est-à-dire que cet ustensile ne se déplace plus dans le repère Rm. Pour cela, il utilise les précédentes estimations des positions et orientations de l'aimant permanent de cet ustensile.

Lors d'une opération 162, le calculateur 32 calcule la variance $V_d$ des X dernières positions estimées pour l'aimant permanent de cet ustensile, où X est, un nombre entier qui, par exemple, dépend de la fréquence $F_{ech}$ de rafraîchissement des mesures des magnétomètres. On peut prendre un nombre d'échantillon correspondant à plus d'une seconde, c'est-à-dire un nombre X supérieur à $F_{ech}$ x 1 secondes. Par exemple, X est supérieur à 10, 100 ou 1000.

Lors d'une opération 164, le calculateur 32 compare la variance $V_d$ à un seuil prédéterminé $S_v$.

Si la variance $V_d$ est supérieure à ce seuil $S_v$, alors le calculateur 32 considère que l'ustensile n'est pas immobile et le procédé retourne à l'étape 100.

Dans le cas contraire, c'est-à-dire si la variance de l'ustensile est inférieure au seuil $S_v$, le calculateur 32

considère alors que cet ustensile est maintenant immobile. Dans ce cas, il procède à une étape 166 lors de laquelle le calculateur 32 ajoute l'identifiant de cet ustensile dans la base 38 et enregistre, associé à cet identifiant, les dernières position, orientation et amplitude du moment magnétique estimées pour l'aimant permanent de cet ustensile.

De plus, lors de l'étape 166, le calculateur 32 remplace, dans le système actuel d'équations, les variables codant la position, l'orientation et l'amplitude du moment magnétique de l'aimant permanent de cet ustensile par des valeurs numériques constantes. Ces valeurs numériques constantes sont égales aux dernières positions, orientation et amplitude estimées pour cet aimant permanent lors de la dernière exécution de l'étape 150. Ainsi, après l'exécution de l'étape 166, le système actuel d'équations comporte moins de variables à estimer qu'avant.

Après l'étape 166, le procédé retourne à l'étape 100.

En parallèle des étapes 104 à 152, lors d'une étape 170, le calculateur 32 détecte également qu'un ustensile a été retiré. Pour cela, lors d'une opération 172, le calculateur 32 calcule la distance $D_u$ qui sépare l'aimant permanent de l'ustensile du magnétomètre $M_{ij}$ le plus proche. Cette distance $D_u$ est calculée à partir de la dernière position estimée pour l'aimant permanent de cet ustensile.

Ensuite, lors d'une opération 174, le calculateur 32 compare la distance $D_u$ à un seuil prédéterminé $S_u$. Si la distance $D_u$ est inférieure ou égale au seuil $S_u$, alors le calculateur 32 conserve les variables codant les position, orientation et amplitude de l'aimant de cet ustensile dans le système actuel d'équations.

Dans le cas contraire, c'est-à-dire si la distance $D_u$ est supérieure au seuil $S_u$, lors d'une opération 176, le calculateur 32 supprime du système actuel d'équations les équations faisant intervenir les variables codant la position, l'orientation et l'amplitude de l'aimant permanent de cet ustensile. Le calculateur supprime ainsi la contribution de l'ustensile qui a été supprimé. Il n'est ensuite plus pris en compte dans le calcul.

A l'issue de l'étape 170, le procédé retourne à l'étape 100.

La mise en oeuvre de ce procédé va maintenant être illustrée dans le cas particulier où les ustensiles sont les pions d'un jeu d'échecs et dans le cas où un échiquier a été dessiné sur la face 24. Initialement, on suppose qu'aucun pion n'est présent sur la face 24.

Lorsqu'un joueur vient disposer le premier pion sur la face 24, le calculateur détecte une perturbation. Étant donné qu'il s'agit du premier pion déposé, la base 38 est vide. Par conséquent, le calculateur 32 localise ce premier pion, tant qu'il est déplacé, en utilisant le système d'équations du modèle $M_1$.

Ensuite, le joueur dépose le premier pion sur la face 24 et le laisse immobile à cet emplacement. Le calculateur 32 détecte alors automatiquement que ce pion est immobile. En réponse, il ajoute un identifiant de ce pion dans la base 38 et les variables codant la position, l'orientation et l'amplitude de l'aimant permanent de ce pion sont remplacées par des valeurs constantes dans le système actuel d'équations.

Le joueur dépose alors un second pion sur la face 24. Le procédé décrit ci-dessus conduit alors cette fois le calculateur 32 à ajouter l'identifiant d'un second ustensile dans la base 38 et à remplacer, dans le système actuel d'équations, les variables codant les position, orientation et amplitude de l'aimant permanent de ce deuxième pion par des constantes. A ce stade, le système actuel d'équations comporte donc des constantes codant les positions, orientations et amplitudes à la fois des premier et deuxième pions.

Ce qui vient d'être décrit précédemment est réitéré pour chaque pion déposé, les uns après les autres sur la face 24. Une fois que l'ensemble des pions ont été déposés sur la face 24, avant que les joueurs ne commencent à jouer, la base 38 comporte alors les identifiants de trente-deux pions.

Ensuite, à chaque fois qu'un joueur déplace un pion, le calculateur détecte une perturbation puis identifie le pion déplacé dans la base 38. Tant qu'un pion est déplacé, le calculateur 32 le localise et, par exemple, commande l'appareil 4 pour déplacer sur l'écran un pion correspondant. Quand l'utilisateur repose le pion sur une autre case, le calculateur 32 détecte que ce pion s'immobilise. Il ajoute donc à nouveau ce pion dans la base 38 des ustensiles immobiles et enregistre dans cette même base sa nouvelle position.

Quand un joueur retire un pion de l'échiquier, le calculateur 32 détecte que le pion s'éloigne de l'échiquier et que la distance qui le sépare du magnétomètre $M_{ij}$ le plus proche devient supérieure au seuil $S_u$. En réponse, il supprime les variables codant la position, l'orientation et l'amplitude de l'aimant permanent de ce pion dans le système actuel d'équations. En même temps, il fait, par exemple, disparaître sur l'écran de l'appareil 4 la représentation graphique de ce pion.

Ainsi, le procédé mis en oeuvre par le calculateur 32 résout seulement un système d'équations avec au plus six variables à estimer pour localiser un pion alors que 32 pions peuvent être simultanément présents sur l'échiquier. Pour cela, le calculateur 32 exploite le fait que tous les pions sont déplacés uniquement les uns après les autres. Le fait d'utiliser un système d'équations ne comportant que peu de variables pour estimer la position d'un pion qui se déplace, permet d'augmenter la précision de la localisation du déplacement de ce pion. Cela limite également le nombre d'opérations à exécuter par le calculateur 32, ce qui décroît sa consommation électrique.

La figure 5 représente un autre mode de réalisation du procédé de la figure 4. Le procédé de la figure 5 est identique au procédé de la figure 4, sauf que l'étape 124 est remplacée par une étape 180. Pour simplifier la figure, seule l'étape 180 a été représentée.

Plus précisément, l'étape 180 consiste à identifier l'ustensile dont un identifiant est contenu dans la base 38 et qui a été déplacé. Pour cela, ici, le calculateur 32 utilise une corrélation entre la perturbation et le champ magnétique généré par les ustensiles identifiés par la base 38.

Lors d'une opération 182, pour chaque ustensile identifié dans la base 38, le calculateur 32 estime le champ magnétique qui serait mesuré par chaque magnétomètre $M_{ij}$ si cet ustensile était le seul à être présent devant la face 24. Par exemple, à cet effet, le calculateur 32 utilise le système d'équations du modèle $M_1$ et les position, orientation et amplitude de l'aimant permanent de cet ustensile enregistrées dans la base 38.

Ensuite, lors d'une opération 184, le calculateur 32 calcule une valeur représentative de la corrélation $C_p$ qui existe entre les mesures calculées lors de l'opération 182 et la perturbation.

Lors d'une opération 186, le calculateur 32 sélectionne l'ustensile pour lequel la corrélation est maximale.

Enfin, lors d'une opération 188, le calculateur 32 compare la corrélation $C_p$ calculée pour l'ustensile sélectionné lors de l'opération 186 à un seuil prédéterminé $S_c$.

Si la corrélation $C_p$ est supérieure au seuil $S_c$, l'ustensile qui se déplace est identifié dans la base 38 et le procédé se poursuit par l'étape 140.

A l'inverse, si la corrélation $C_p$ est inférieure au seuil $S_c$, l'ustensile qui a causé la perturbation n'est pas identifié comme étant l'un de ceux de la base 38 et le procédé se poursuit par l'étape 142.

De nombreux autres modes de réalisation du dispositif 12 sont possibles. Par exemple, la face avant 24 n'est pas nécessairement plane. Par exemple, en variante, il s'agit d'une forme en relief. Typiquement, cette forme en relief peut comporter des logements en creux destinés à recevoir et à immobiliser les ustensiles dans ces logements.

Il est possible de limiter le nombre d'emplacements où un ustensile peut être disposé par rapport à la face avant 24. Pour cela, l'interface 2 comporte plusieurs emplacements, équipé chacun de détrompeur propre à empêcher la fixation à cet emplacement d'un certain nombre d'ustensiles et, au contraire, à autoriser la fixation à cet emplacement d'autres ustensiles différents.

D'autres ustensiles que ceux précédemment décrits sont réalisables et utilisables dans l'interface 2. Par exemple, le corps de l'ustensile peut être omis. Dans ce cas, un ustensile se réduit à un aimant permanent.

L'approximation utilisée pour construire le modèle $M_P$ peut aussi être une approximation quaternaire ou supérieure, c'est-à-dire que les équations du magnétisme sont approximées à un ordre supérieur à celui correspondant à l'approximation dipolaire.

Les magnétomètres du réseau de magnétomètres ne sont pas nécessairement rangés en colonnes et en lignes. Ils peuvent être agencés aussi selon d'autres motifs. Par exemple, les magnétomètres sont disposés sur chaque sommet de chaque maille triangulaire ou hexagonale d'un maillage d'un plan.

La disposition des magnétomètres les uns par rapport aux autres peut aussi être aléatoire ou non régulière. Ainsi, la distance entre deux magnétomètres immédiatement consécutifs dans le réseau n'est pas nécessairement la même pour toutes les paires de deux magnétomètres immédiatement consécutifs. Par exemple, la densité de magnétomètres dans une zone donnée du réseau peut être plus importante qu'ailleurs. Augmenter la densité dans une zone donnée peut permettre d'augmenter la précision de la mesure dans cette zone.

Le réseau de magnétomètres peut aussi s'étendre dans trois directions non colinéaires de l'espace. Dans ces conditions, les magnétomètres sont répartis à l'intérieur d'un volume à trois dimensions.

Le nombre N de magnétomètres peut également être supérieur ou égal à soixante-quatre ou quatre-vingt dix.

Tous les magnétomètres du réseau de magnétomètres ne sont pas nécessairement identiques les uns aux autres. En variante, les magnétomètres n'ont pas tous la même sensibilité.

L'appareil 4 peut être remplacé par tout type d'appareil électrique qui doit être commandé en réponse à une action d'un être humain. Par exemple, l'appareil commandé peut être un robot, une machine-outil ou autre.

Dans tous les modes de réalisation décrits ici, l'aimant permanent peut être remplacé par un objet magnétique non alimenté en permanence et qui acquiert un moment magnétique en présent d'un champ magnétique continu extérieur, tel que le champ magnétique terrestre. Par exemple, l'aimant permanent est remplacé par une pièce en matériau magnétique doux. Un matériau magnétique est considéré comme doux si son champ magnétique coercitif est inférieur à 10 ou 1 A.m$^{-1}$. Une telle pièce présente un moment magnétique créé par l'interaction entre le champ magnétique terrestre et la pièce en matériau magnétique doux.

De nombreux autres modes de réalisation du procédé de la figure 4 ou 5 sont possibles. Par exemple, le nombre de mesures utilisées pour calculer la variance $V_d$ peut être fonction de la durée d'une fenêtre temporelle glissante. Typiquement, seules les mesures réalisées à l'intérieur de cette fenêtre temporelle glissante sont prises en compte pour calculer la variance.

Il existe aussi d'autres moyens que la variance pour déterminer si un ustensile est immobile. Par exemple on peut incrémenter un compteur tant que l'ustensile ne s'est pas ou peu déplacé. Dès que ce compteur atteint un seuil prédéterminé $S_{cmax}$ l'ustensile est dit immobile. Plus précisément, initialement, l'unité 30 mémorise la position actuelle $P_n$ de l'ustensile comme étant la position de référence $P_{ref}$. A chaque itération suivante on vérifie que l'ustensile s'est peu déplacé par rapport à la position de référence $P_{ref}$. Pour cela, par exemple, l'unité 30 vérifie que l'écart entre la

position actuelle $P_n$ et la position $P_{ref}$ est inférieur à un seuil prédéterminé $S_{immo}$. Dans l'affirmative, l'unité 30 incrémente le compteur. Dans le cas contraire, l'unité 30 réinitialise la position de référence $P_{ref}$ en la prenant égale à la position actuelle $P_n$. L'unité 30 réinitialise en même temps le compteur. On reproduit le même schéma à chaque itération et pour chaque ustensile. Cette méthode est plus facile a implémenter en embarquer et requiert moins de puissance de calcul que le calcul de la variance $V_d$.

Lors de l'opération 164, le seuil $S_v$ peut être spécifique à la variable estimée. Par exemple, un premier seuil $S_{v1}$ est utilisé lorsque la variable code une position d'un premier type d'aimant permanent et un second seuil $S_{v2}$ est utilisé lorsque la variable code la position d'un second type d'aimant permanent, par exemple, moins puissant. L'ustensile est dit immobile si la variance sur chaque variable de chacun de ses aimants permanents est inférieure au seuil correspondant.

Une fois estimée, l'amplitude des moments magnétiques des aimants permanents peut être considérée comme une constante. Ainsi, le calculateur 32 ne remplace jamais, dans le système actuel d'équations, la valeur numérique codant l'amplitude d'un moment magnétique d'un aimant permanent par une variable. Autrement dit, seules les valeurs codant la position et l'orientation de l'aimant permanent sont remplacées par des variables si une nouvelle estimation de cette position et de cette orientation de l'aimant permanent doit être réalisée. L'amplitude des aimants permanents de chaque ustensile peut aussi être une donnée connue dès l'initialisation du dispositif 12 de sorte qu'il n'est pas nécessaire d'estimer cette donnée à partir de mesures des magnétomètres $M_{ij}$.

Les position, orientation et amplitude enregistrées dans la base 38 ne sont pas nécessairement prises égales à la dernière estimation de ces valeurs. En variante, ces valeurs peuvent être calculées à partir de plusieurs estimations de ces valeurs obtenues lors des X précédentes estimations. Par exemple, ces valeurs sont calculées en les prenant égales à la moyenne des positions et orientations estimées pendant les X dernières itérations de l'étape 150.

D'autres méthodes sont possibles pour déterminer qu'un ustensile est immobile. Par exemple, la hauteur de l'ustensile par rapport à la face 24 est calculée à partir de la position estimée de l'aimant permanent de cet ustensile. Si cette hauteur est inférieure à un seuil prédéterminé, cela signifie que l'ustensile a été posé sur la face 24 et donc qu'il est immobile. Ce mode de réalisation est particulièrement pertinent lorsque le support est équipé de logements qui ne permettent pas un déplacement horizontal lorsque l'ustensile y est inséré.

D'autres méthodes sont possibles pour identifier l'ustensile de la base 38 qui a été déplacé. Par exemple, il est possible de mettre en oeuvre une méthode appelée « méthode de la convergence partielle » par la suite. Cette méthode consiste à identifier les variables du ou des ustensiles de la base 38 qui, si elles étaient réintroduites dans le système actuel d'équations permettraient de minimiser l'erreur sur les positions et amplitudes estimées. Pour cela, le calculateur 32 procède comme suit :

Opération 1) : Pour le premier ustensile de la base 38, le calculateur 32 réintroduit dans le système actuel d'équations les variables codant la position et l'amplitude des aimants permanents de cet ustensile. Lors de cette opération, seule les variables de ce premier ustensile sont réintroduites dans le système d'équations. Les variables des autres ustensiles de la base 38 ne sont pas réintroduites dans le système actuel d'équations. Ainsi, à l'issue de l'opération 1), on obtient un nouveau système d'équations contenant uniquement les variables du premier ustensile.

Opération 2) : Ensuite, le calculateur 32 résout ce nouveau système d'équations pour obtenir une estimation de la position et de l'amplitude de chaque aimant permanent du premier ustensile.

Opération 3) : Ensuite, le calculateur 32 calcule une erreur $E_{err}$ d'estimation représentative de l'écart entre :

- les valeurs estimées des mesures des magnétomètres $M_{ij}$ lorsque l'ustensile occupe la position et l'orientation estimées lors de l'opération 2), et
- les valeurs réellement mesurées par les magnétomètres $M_{ij}$ au même instant.

Les opérations 1) à 3) sont itérées pour le premier, puis le deuxième jusqu'au dernier ustensile de la base 38. Ensuite, le calculateur 32 sélectionne l'ustensile pour lequel l'erreur d'estimation $E_{err}$ calculée lors de l'opération 3) est la plus petite. Si pour cet ustensile sélectionné, l'erreur $E_{err}$ est supérieure à un seuil prédéterminé $S_{err}$, alors, l'ustensile qui a été déplacé n'est pas identifié dans la base 38. Si à l'inverse, l'erreur d'estimation $E_{err}$ est inférieure à ce seuil $S_{err}$, l'ustensile qui a provoqué la perturbation est identifié parmi ceux contenus dans la base 38. Par exemple, la valeur du seuil $S_{err}$ est prise égale à la valeur de l'erreur $E_{err}$ calculée à partir des positions et amplitudes estimées lors de la dernière itération de l'étape 150.

En variante, si la base 38 de données est composée d'ustensiles contenant chacun plusieurs aimants fixes à l'intérieur de cet ustensile, les variables réintroduites lors de l'opération 1) correspondent à la position et l'orientation de l'ustensile et non à la position, l'orientation et le moment magnétique de chaque aimant de cet ustensile.

Le calcul des coordonnées du barycentre $B_P$ peut être omis notamment si l'identification de l'ustensile déplacé, parmi ceux dont les identifiants sont contenus dans la base 38, est réalisée sans utiliser les coordonnées de ce barycentre $B_P$. Dans ce cas, lorsqu'un nouvel ustensile est ajouté, les position et orientation de l'aimant permanent de ce nouvel ustensile sont initialisées à des valeurs prédéfinies. Par exemple, ces valeurs prédéfinies correspondent au centre de la face 24.

D'autres méthodes sont possibles pour détecter qu'un ustensile est retiré. Par exemple, si le calculateur 32 détecte que l'ustensile s'est immobilisé dans une position qui se trouve en dehors d'une zone prédéfinie du repère Rm, alors, l'ustensile est considéré comme retiré. Toutefois, si l'ustensile reste suffisamment proche des magnétomètres $M_{ij}$ pour que le champ magnétique généré par son aimant permanent puisse influer de façon non négligeable la mesure d'au moins l'un des magnétomètres $M_{ij}$, alors les constantes codant, dans le système actuel d'équations la position, l'orientation et l'amplitude de l'aimant permanent de cet ustensile ne sont pas éliminées de ce système actuel d'équations.

Un ustensile peut comporter U aimants permanents, où U est un nombre entier strictement supérieur à un. Dans ce cas, cet ustensile est non pas associé à six variables, mais à 6*U variables. Dès lors, quand cet ustensile est ajouté dans la base 38, ce sont les valeurs de ces 6*U variables qui sont enregistrées dans cette base 38. De plus, quand cet ustensile se déplace, le système actuel d'équations comporte non pas six variables à estimer, mais 6*U variables à estimer.

Les procédés ci-dessus ont été décrits dans le contexte particulier où au plus un seul ustensile se déplace à un instant donné. Toutefois, pour détecter la présence et, en alternance, l'absence d'une perturbation, cette hypothèse n'est pas nécessaire. Plus précisément, les opérations décrites ci-dessus pour détecter la présence d'une perturbation fonctionnent aussi dans le cas où la perturbation est causée par le déplacement simultané de deux ustensiles ou plus. Dans le cas où la perturbation est causée par le déplacement simultané de plusieurs ustensiles, les étapes 124 et 180 ne permettent pas d'identifier dans la base 38 les ustensiles simultanément déplacés. Ainsi, dans ce cas, ces étapes 124, 140 et 180 sont omises. L'étape 142 est alors remplacée par une étape lors de laquelle le système actuel d'équations est réinitialisé. Par exemple, le système d'équations est réinitialisé en remplaçant toutes les constantes numériques codant les positions, orientations et amplitudes des aimants des ustensiles immobiles par des variables à estimer. Le système d'équations peut aussi être réinitialisé à un état par défaut prédéterminé. Par exemple, dans le cas précédemment décrit d'un jeu d'échecs, la réinitialisation consiste à remplacer le système actuel d'équations par le système d'équations du modèle $M_{32}$. Dans le cas où la perturbation peut être causée par le déplacement simultané de plusieurs ustensiles, il est aussi possible d'identifier dans la base 38 les ustensiles qui sont déplacés. Par exemple, pour cela, la méthode de la convergence partielle décrite ci-dessus peut être utilisée. Dans ce cas, tous les ustensiles de la base 38 qui permettent de réduire l'erreur $E_{err}$ sont considérés comme étant les ustensiles simultanément déplacés. Le système actuel d'équations est alors remplacé pour les itérations suivantes par un nouveau système d'équations dans lequel les variables codant la position et l'amplitude du moment magnétique de chaque ustensile identifié comme étant en cours de déplacement sont réintroduites.

En variante, initialement, la base 38 n'est pas vide, mais comporte déjà les identifiants et les positions, orientations et amplitudes des aimants permanents de plusieurs ustensiles immobiles. Une telle initialisation de la base 38 peut être réalisée sans utiliser les mesures des magnétomètres $M_{ij}$, par exemple, si la position initiale de chaque ustensile est considérée comme connue à l'avance. C'est par exemple le cas pour des ustensiles comme des pions d'un jeu d'échecs ou de dame.

L'établissement des mesures du champ magnétique de référence peut consister à acquérir les mesures des différents magnétomètres $M_{ij}$ à l'instant où tous les ustensiles sont immobiles.

L'amplitude de la perturbation peut être calculée de façons différentes. Par exemple, l'amplitude $A_P$ est donnée par la relation suivante : $A_P = Max[(m_{ijn} - m_{refijn})^2 + (m_{ij2} - m_{refij2})^2 + (m_{ij3} - m_{refij3})^2]$ calculée pour tous les indices i et j variant de 1 à N, où Max[...] est la fonction qui retourne le maximum des termes contenus entre crochets.

Lors de l'identification de l'ustensile immobile qui a été déplacé, l'opération 132 ou 188 peut être omise. Dans ce cas, à chaque itération de l'étape 124 ou 180, un ustensile est systématiquement identifié comme étant celui qui a été déplacé parmi ceux contenus dans la base 38.

De nombreuses méthodes différentes sont utilisables pour déterminer la position et l'orientation de l'objet magnétique. Par exemple, la méthode décrite dans US6269324 est utilisable. Ces méthodes n'utilisent pas nécessairement un filtre de Kalman. Par exemple, les méthodes décrites dans US2002/171427A1 ou US6263230B1 sont possibles.

**Revendications**

1. Procédé de localisation d'ustensiles mobiles présentés devant un réseau de magnétomètres comportant N magnétomètres tri-axes ($M_{ij}$) reliés mécaniquement les uns aux autres sans aucun degré de liberté pour conserver une distance connue entre chacun des magnétomètres, où N est un nombre entier supérieur ou égal à cinq, chaque ustensile comportant au moins un objet magnétique et un ou plusieurs ustensiles pouvant être déplacés directement à la main par un être-humain tandis que les autres ustensiles restent immobiles, ce procédé comportant :

a) la mesure (100) par chacun des magnétomètres de l'amplitude du champ magnétique le long de chacun de ses axes de mesure,

b) l'estimation (150) à partir des mesures des magnétomètres, des valeurs de plusieurs variables en résolvant un système actuel d'équations reliant ces variables à chaque mesure d'un magnétomètre tri-axes du réseau, ces variables correspondant aux positions, orientations et amplitudes des moments magnétiques des objets magnétiques des ustensiles à localiser, un ustensile étant localisé dès que les position et orientation du moment magnétique de chaque objet magnétique de cet ustensile ont été estimées,

- l'itération des étapes a) et b) à des instants successifs dans le temps pour obtenir les valeurs estimées de chaque variable à ces différents instants successifs,

**caractérisé en ce que** le procédé comporte :

c) la détection (160) de chaque ustensile immobile à partir des positions et orientations de chaque objet magnétique de cet ustensile obtenues à l'issue de précédentes itérations de l'étape b), et en réponse à la détection d'un ustensile immobile, l'ajout de cet ustensile et des dernières position, orientation et amplitude du moment magnétique de chacun de ses objets magnétiques dans une liste d'ustensiles immobiles,

d) l'établissement (106) des mesures des magnétomètres lorsqu'ils sont uniquement en présence d'un champ magnétique de référence généré seulement par les objets magnétiques de tous les ustensiles immobiles présents dans la liste d'ustensiles immobiles, ce champ magnétique de référence étant calculé à partir des positions, orientations et amplitudes des moments magnétiques des objets magnétiques des ustensiles enregistrés dans la liste d'ustensiles immobiles, et

e) le calcul (108) de l'amplitude d'une perturbation à partir des écarts entre les mesures réalisées lors de l'étape a) et les mesures établies lors de l'étape d), et

- si l'amplitude de la perturbation franchit un seuil prédéterminé, l'étape b) est exécutée, sinon l'exécution de l'étape b) est omise et le procédé retourne à l'étape a) sans avoir exécuté l'étape b).

2. Procédé selon la revendication 1, dans lequel si l'amplitude de la perturbation franchit un seuil prédéterminé, le procédé comporte l'identification de l'ustensile qui a été déplacé parmi les ustensiles contenus dans la liste d'ustensiles immobiles, cette liste d'ustensiles immobiles contenant pour chaque objet magnétique de chaque ustensile immobile: sa position, son orientation et l'amplitude de son moment magnétique, cette identification de l'ustensile comportant :

- le calcul (120) du barycentre de la perturbation, ce barycentre étant le barycentre des positions des différents magnétomètres du réseau, dans lequel la position de chaque magnétomètre est pondérée par l'écart entre les mesures réalisées par ce magnétomètre lors de l'étape a) et les mesures établies pour ce magnétomètre lors de l'étape d), et

- la sélection (130), dans la liste d'ustensiles immobiles, de l'ustensile dont les objets magnétiques sont les plus proches de ce barycentre, l'ustensile ainsi sélectionné étant l'ustensile identifié.

3. Procédé selon la revendication 2, dans lequel si la distance qui sépare l'ustensile le plus proche du barycentre est supérieure à un seuil prédéterminé, alors le procédé comporte :

- l'ajout (142) au système actuel d'équations d'au moins une nouvelle équation reliant de nouvelles variables codant la position, l'orientation et l'amplitude du moment magnétique de chaque objet magnétique d'un nouvel ustensile à chaque mesure d'un magnétomètre tri-axes du réseau, pour obtenir un nouveau système d'équations, puis,

- l'utilisation de ce nouveau système d'équations à la place du système actuel d'équations lors des itérations suivantes des étapes a) et b), le nouveau système d'équations devenant ainsi, pour les itérations suivantes des étapes a) et b), le système actuel d'équations.

4. Procédé selon la revendication 1, dans lequel si l'amplitude de la perturbation franchit un seuil prédéterminé, le procédé comporte l'identification (180) de l'ustensile qui a été déplacé parmi les ustensiles contenus dans la liste d'ustensiles immobiles, cette liste d'ustensiles immobiles contenant pour chaque objet magnétique de chaque ustensile immobile : sa position, son orientation et l'amplitude de son moment magnétique, cette identification de l'ustensile comportant :

e) l'estimation (182) du champ magnétique mesuré par chaque magnétomètre en présence d'un seul ustensile immobile et en absence de tout autre ustensile, à partir de la position, de l'orientation et de l'amplitude du moment magnétique de chaque objet magnétique de cet ustensile immobile enregistrées dans la liste d'ustensiles immobiles,

f) le calcul (184) d'une corrélation entre les mesures estimées lors de l'étape e) et les écarts entre les mesures réalisées par les magnétomètres lors de l'étape a) et les mesures établies pour ces mêmes magnétomètres lors de l'étape d), et

g) la sélection (186) dans la liste d'ustensiles immobiles de celui qui comporte le ou les objets magnétiques qui présentent la corrélation, calculée lors de l'étape f), la plus forte, l'ustensile ainsi sélectionné étant l'ustensile identifié.

5. Procédé selon la revendication 4, dans lequel si la corrélation la plus forte est inférieure à un seuil prédéterminé, alors le procédé comporte :

- l'ajout (142) au système actuel d'équations d'au moins une nouvelle équation reliant de nouvelles variables codant la position, l'orientation et l'amplitude du moment magnétique de chaque objet magnétique d'un nouvel ustensile à chaque mesure d'un magnétomètre tri-axes du réseau, pour obtenir un nouveau système d'équations, puis,
- l'utilisation de ce nouveau système d'équations à la place du système actuel d'équations lors des itérations suivantes des étapes a) et b), le nouveau système d'équations devenant ainsi, pour les itérations suivantes des étapes a) et b), le système actuel d'équations.

6. Procédé selon la revendication 2 ou 4, dans lequel le procédé comporte, en réponse à la détection (160) d'un ustensile immobile et à l'ajout de cet ustensile dans la liste des ustensiles immobiles, le remplacement (166) dans le système actuel d'équations des variables codant la position, l'orientation et l'amplitude du moment magnétique de chaque objet magnétique de cet ustensile par des valeurs numériques constantes égales à la position actuelle, l'orientation actuelle et l'amplitude actuelle du moment magnétique de chaque objet magnétique de cet ustensile pour obtenir un nouveau système d'équations dans lequel le nombre de variables dont la valeur doit être estimée est plus petit que dans le système actuel d'équations, puis

- l'utilisation du nouveau système d'équations à la place du système actuel d'équations lors des itérations suivantes des étapes a) et b), le nouveau système d'équations devenant ainsi pour les itérations suivantes des étapes a) et b), le système actuel d'équations, puis
- en réponse à l'identification de cet ustensile lors d'une itération suivante de l'étape d'identification de l'ustensile qui a été déplacé, le remplacement (140) dans le système actuel d'équations des valeurs numériques constantes codant la position et l'orientation de chaque objet magnétique de cet ustensile par des variables pour obtenir un nouveau système d'équations dans lequel le nombre de variables, dont la valeur doit être estimée, est plus grand que dans le système actuel d'équations et l'utilisation du nouveau système d'équations à la place du système actuel d'équations lors des itérations suivantes des étapes a) et b).

7. Procédé selon l'une quelconque des revendications précédentes, dans lequel le procédé comporte la suppression (176), dans le système actuel d'équations, des variables codant la position, l'orientation et l'amplitude du moment magnétique de chaque objet magnétique d'un ustensile si la distance estimée entre cet ustensile et le réseau de magnétomètres dépasse un seuil prédéterminé pour obtenir un nouveau système d'équations, puis l'utilisation de ce nouveau système d'équations à la place du système actuel d'équations lors des itérations suivantes des étapes a) et b), le nouveau système d'équations devenant ainsi, pour les itérations suivantes des étapes a) et b), le système actuel d'équations.

8. Support d'enregistrement d'informations, **caractérisé en ce qu'**il comporte des instructions configurées pour l'exécution d'un procédé conforme à l'une quelconque des revendications précédentes, lorsque ces instructions sont exécutées par un calculateur électronique.

9. Dispositif de localisation d'ustensiles mobiles, chaque ustensile comportant au moins un objet magnétique et un ou plusieurs ustensiles pouvant être déplacés directement à la main par un être-humain tandis que les autres ustensiles restent immobiles,, ce dispositif comportant :

- un réseau de magnétomètres comportant N magnétomètres tri-axes ($M_{ij}$) reliés mécaniquement les uns aux autres sans aucun degré de liberté pour conserver une distance connue entre chacun des magnétomètres, où N est un nombre entier supérieur ou égal à cinq,
- une unité (30) de traitement programmée pour :

a) acquérir la mesure par chacun des magnétomètres de l'amplitude du champ magnétique le long de chacun de ses axes de mesure,
b) estimer à partir des mesures acquises des magnétomètres, des valeurs de plusieurs variables en résolvant un système actuel d'équations reliant ces variables à chaque mesure d'un magnétomètre tri-axes du réseau, ces variables correspondant aux positions, orientations et amplitudes des moments magnétiques des objets magnétiques des ustensiles à localiser, un ustensile étant localisé dès que les position et orientation du moment magnétique de chaque objet magnétique de cet ustensile ont été estimées,

- itérer les étapes a) et b) à des instants successifs dans le temps pour obtenir les valeurs estimées de chaque variable à ces différents instants successifs,
**caractérisé en ce que** l'unité (30) de traitement est également programmée pour :

c) détecter chaque ustensile immobile à partir des positions et orientations de chaque objet magnétique de cet ustensile obtenues à l'issue de précédentes itérations de l'étape b), et en réponse à la détection d'un ustensile immobile, ajouter cet ustensile et les dernières position, orientation et amplitude du moment magnétique de chacun de ses objets magnétiques dans une liste d'ustensiles immobiles,
d)) établir des mesures des magnétomètres lorsqu'ils sont uniquement en présence d'un champ magnétique de référence généré seulement par les objets magnétiques de tous les ustensiles immobiles présents dans la liste d'ustensiles immobiles, ce champ magnétique de référence étant calculé à partir des positions, orientations et amplitudes des moments magnétiques des objets magnétiques des ustensiles enregistrés dans la liste d'ustensiles immobiles, et
e) calculer l'amplitude d'une perturbation à partir des écarts entre les mesures réalisées lors de l'étape a) et les mesures établies lors de l'étape d), et

- si l'amplitude de la perturbation franchit un seuil prédéterminé, exécuter l'étape b), sinon omettre l'exécution de l'étape b) et retourner à l'étape a) sans avoir exécuté l'étape b).

## Patentansprüche

1. Verfahren zum Lokalisieren beweglicher Geräte, die vor einem Netz von Magnetometern vorhanden sind, das N dreiachsige Magnetometer ($M_{ij}$) umfasst, die ohne jeden Freiheitsgrad mechanisch miteinander verbunden sind, um einen bekannten Abstand zwischen jedem der Magnetometer aufrecht zu erhalten, wobei N eine ganze Zahl größer oder gleich fünf ist, wobei jedes Gerät wenigstens ein magnetisches Objekt enthält und wobei ein oder mehrere Geräte durch einen Menschen direkt manuell verlagert werden können, während die anderen Geräte unbeweglich bleiben, wobei dieses Verfahren Folgendes umfasst:

a) Messen (100) mit jedem der Magnetometer der Amplitude des Magnetfeldes längs jeder seiner Messachsen,
b) Schätzen (150) anhand der Messungen der Magnetometer von Werten mehrerer Variablen durch Lösen eines aktuellen Gleichungssystems, das diese Variablen mit jeder Messung eines dreiachsigen Magnetometers des Netzes in Beziehung setzt, wobei diese Variablen den Positionen, Orientierungen und Amplituden der magnetischen Momente der magnetischen Objekte der zu lokalisierenden Geräte entsprechen, wobei ein Gerät lokalisiert wird, sobald die Position und die Orientierung des magnetischen Moments jedes magnetischen Objekts dieses Geräts geschätzt worden sind,

- Iterieren der Schritte a) und b) zu aufeinander folgenden Zeitpunkten, um die geschätzten Werte jeder Variable zu diesen verschiedenen aufeinander folgenden Zeitpunkten zu erhalten,

**dadurch gekennzeichnet, dass** das Verfahren Folgendes umfasst:

c) Detektieren (160) jedes unbeweglichen Geräts anhand der Positionen und Orientierungen jedes magnetischen Objekts dieses Geräts, die aus vorhergehenden Iterationen des Schrittes b) erhalten werden, und in Reaktion auf die Detektion eines unbeweglichen Geräts Hinzufügen dieses Geräts und der letzten Position, der letzten Orientierung und der letzten Amplitude des magnetischen Moments jedes seiner magnetischen Objekte zu einer Liste unbeweglicher Geräte,

d) Erstellen (106) von Messungen von Magnetometern, wenn sie in Gegenwart eines Referenzmagnetfeldes, das ausschließlich durch die magnetischen Objekte sämtlicher unbeweglicher Geräte, die in der Liste unbeweglicher Geräte vorhanden sind, erzeugt wird, eindeutig sind, wobei dieses Referenzmagnetfeld anhand von Positionen, Orientierungen und Amplituden magnetischer Momente magnetischer Objekte von Geräten, die in der Liste unbeweglicher Geräte aufgezeichnet sind, berechnet wird, und

e) Berechnen (108) der Amplitude einer Störung anhand von Abständen zwischen den Messungen, die im Schritt a) ausgeführt werden, und den Messungen, die im Schritt d) erstellt werden, und

- falls die Amplitude der Störung einen vorgegebenen Schwellenwert überschreitet, Ausführen des Schrittes b), andernfalls Weglassen des Schrittes b), wobei das Verfahren zum Schritt a) zurückkehrt, ohne den Schritt b) ausgeführt zu haben.

2. Verfahren nach Anspruch 1, wobei dann, wenn die Amplitude der Störung einen vorgegebenen Schwellenwert überschreitet, das Verfahren das Identifizieren des Geräts, das verlagert worden ist, unter den in der Liste unbeweglicher Geräte enthaltenen Geräten umfasst, wobei diese Liste unbeweglicher Geräte für jedes magnetische Objekt jedes unbeweglichen Geräts enthält: seine Position, seine Orientierung und die Amplitude seines magnetischen Moments, wobei diese Identifizierung dieses Geräts Folgendes umfasst:

- Berechnen (120) des Schwerpunkts der Störung, wobei dieser Schwerpunkt der Schwerpunkt der Positionen der verschiedenen Magnetometer des Netzes ist, wobei die Position jedes Magnetometers durch den Abstand zwischen den durch das Magnetometer im Schritt a) ausgeführten Messungen und den Messungen, die für dieses Magnetometer während des Schrittes d) erstellt werden, gewichtet wird, und

- Auswählen (130) in der Liste unbeweglicher Geräte desjenigen Geräts, dessen magnetische Objekte sich am nächsten bei diesem Schwerpunkt befinden, wobei dieses Gerät dann als das identifizierte Gerät ausgewählt wird.

3. Verfahren nach Anspruch 2, wobei dann, wenn die Strecke, die das nächste Gerät von dem Schwerpunkt trennt, größer als ein vorgegebener Schwellenwert ist, das Verfahren Folgendes umfasst:

- Hinzufügen (142) zu dem aktuellen Gleichungssystem wenigstens einer neuen Gleichung, die neue Variablen, die die Position, die Orientierung und die Amplitude des magnetischen Moments jedes magnetischen Objekts eines neuen Geräts codieren, mit jeder Messung eines dreiachsigen Magnetometers des Netzes in Beziehung setzt, um ein neues Gleichungssystem zu erhalten, dann

- Verwenden dieses neuen Gleichungssystems anstelle des aktuellen Gleichungssystems bei den folgenden Iterationen der Schritte a) und b), wobei das neue Gleichungssystem somit für die folgenden Iterationen der Schritte a) und b) zu dem aktuellen Gleichungssystem wird.

4. Verfahren nach Anspruch 1, wobei dann, wenn die Amplitude der Störung einen vorgegebenen Schwellenwert überschreitet, das Verfahren das Identifizieren (180) des Geräts, das unter den in der Liste unbeweglicher Geräte enthaltenen Geräte verlagert worden ist, umfasst, wobei diese Liste unbeweglicher Geräte für jedes magnetische Objekt jedes unbeweglichen Geräts enthält: seine Position, seine Orientierung und die Amplitude seines magnetischen Moments, wobei dieses Identifizieren des Geräts Folgendes umfasst:

e) Schätzen (182) des von jedem Magnetometer in Gegenwart eines einzigen unbeweglichen Geräts und bei Abwesenheit jedes anderen Geräts gemessenen Magnetfeldes anhand der Position, der Orientierung und der Amplitude des magnetischen Moments jedes magnetischen Objekts dieses unbeweglichen Geräts, das in der Liste unbeweglicher Geräte aufgezeichnet ist,

f) Berechnen (184) einer Korrelation zwischen den im Schritt e) geschätzten Messungen und den Abständen zwischen den Messungen, die von den Magnetometern im Schritt a) ausgeführt wurden, und den Messungen, die für dieselben Magnetometer im Schritt d) erstellt wurden, und

g) Auswählen (186) aus einer Liste unbeweglicher Geräte desjenigen Geräts, das das oder die magnetischen Objekte enthält, die die stärkste im Schritt f) berechnete Korrelation aufweisen, wobei das somit ausgewählte Gerät das identifizierte Gerät ist.

5. Verfahren nach Anspruch 4, wobei dann, wenn die stärkste Korrelation kleiner als ein vorgegebener Schwellenwert ist, das Verfahren Folgendes umfasst:

- Hinzufügen (142) zu dem aktuellen Gleichungssystem wenigstens einer neuen Gleichung, die neue Variablen, die die Position, die Orientierung und die Amplitude des magnetischen Moments jedes magnetischen Objekts eines neuen Geräts codieren, mit jeder Messung eines dreiachsigen Magnetometers des Netzes in Beziehung setzt, um ein neues Gleichungssystem zu erhalten, dann

- Verwenden dieses neuen Gleichungssystems anstelle des aktuellen Gleichungssystems bei den folgenden Iterationen der Schritte a) und b), wobei das neue Gleichungssystem somit für die folgenden Iterationen der Schritte a) und b) zu dem aktuellen Gleichungssystem wird.

6. Verfahren nach Anspruch 2 oder 4, wobei das Verfahren in Reaktion auf die Detektion (160) eines unbeweglichen Geräts und die Hinzufügung dieses Geräts zu der Liste unbeweglicher Geräte das Ersetzen (166) in dem aktuellen Gleichungssystem der Variablen, die die Position, die Orientierung und die Amplitude des magnetischen Moments jedes magnetischen Objekts dieses Geräts codieren, durch konstante numerische Werte, die gleich der aktuellen Position, der aktuellen Orientierung und der aktuellen Amplitude des magnetischen Moments jedes magnetischen Objekts dieses Geräts sind, umfasst, um ein neues Gleichungssystem zu erhalten, in dem die Anzahl von Variablen, deren Wert geschätzt werden muss, kleiner als in dem aktuellen Gleichungssystem ist, dann

- Verwenden des neuen Gleichungssystems anstelle des aktuellen Gleichungssystems in den folgenden Iterationen der Schritte a) und b), wobei das neue Gleichungssystem somit für die folgenden Iterationen der Schritte a) und b) zu dem aktuellen Gleichungssystem wird, dann
- in Reaktion auf die Identifizierung dieses Geräts bei einer folgenden Iteration des Schrittes des Identifizierens des Geräts, das verlagert worden ist, Ersetzen (140) in dem aktuellen Gleichungssystem von konstanten numerischen Werten, die die Position und die Orientierung jedes magnetischen Objekts dieses Geräts codieren, durch Variablen, um ein neues Gleichungssystem zu erhalten, in dem die Anzahl von Variablen, deren Wert geschätzt werden muss, größer als in dem aktuellen Gleichungssystem ist, und Verwenden des neuen Gleichungssystems anstelle des aktuellen Gleichungssystems bei den folgenden Iterationen der Schritte a) und b).

7. Verfahren nach einem der vorhergehenden Ansprüche, wobei das Verfahren Folgendes umfasst: in dem aktuellen Gleichungssystem Unterdrücken (176) von Variablen, die die Position, die Orientierung und die Amplitude des magnetischen Moments jedes magnetischen Objekts eines Geräts codieren, falls die geschätzte Strecke zwischen diesem Gerät und dem Netz von Magnetometern einen vorgegebenen Schwellenwert überschreitet, um ein neues Gleichungssystem zu erhalten, dann Verwenden dieses neuen Gleichungssystems anstelle des aktuellen Gleichungssystems in den folgenden Iterationen der Schritte a) und b), wobei das neue Gleichungssystem somit für die folgenden Iterationen der Schritte a) und b) zu dem aktuellen Gleichungssystem wird.

8. Datenaufzeichnungsträger, **dadurch gekennzeichnet, dass** er Befehle enthält, die konfiguriert sind, ein Verfahren nach einem der vorhergehenden Ansprüche auszuführen, wenn diese Befehle von einem elektronischen Rechner ausgeführt werden.

9. Vorrichtung zum Lokalisieren beweglicher Geräte, wobei jedes Gerät wenigstens ein magnetisches Objekt enthält und ein oder mehrere Geräte durch einen Menschen manuell direkt verlagert werden können, während die anderen Geräte unbeweglich bleiben, wobei diese Vorrichtung Folgendes umfasst:

- ein Netz von Magnetometern, das N dreiachsige Magnetometer ($M_{ij}$) enthält, die ohne jeden Freiheitsgrad mechanisch miteinander verbunden sind, um eine bekannte Strecke zwischen jedem der Magnetometer aufrecht zu erhalten, wobei N eine ganze Zahl größer oder gleich fünf ist,
- eine Verarbeitungseinheit (30), die programmiert ist, um:

a) die Messung durch jedes der Magnetometer der Amplitude des Magnetfeldes längs jeder seiner Messachse zu erfassen,
b) anhand der erfassten Messungen der Magnetometer die Werte mehrerer Variablen zu schätzen, indem ein aktuelles Gleichungssystem gelöst wird, das diese Variablen mit jeder Messung eines dreiachsigen Magnetometers des Netzes in Beziehung setzt, wobei diese Variablen den Positionen, Orientierungen und Amplituden der magnetischen Momente der magnetischen Objekte der zu lokalisierenden Geräte entsprechen, wobei ein Gerät lokalisiert wird, sobald die Position und die Orientierung des magnetischen Moments jedes magnetischen Objekts dieses Geräts geschätzt worden sind,

- die Schritte a) und b) zu aufeinander folgenden Zeitpunkten zu iterieren, um die geschätzten Werte jeder Variable zu diesen verschiedenen aufeinander folgenden Zeitpunkten zu erhalten,
**dadurch gekennzeichnet, dass** die Verarbeitungseinheit (30) außerdem programmiert ist, um:

c) jedes unbewegliche Gerät anhand der Positionen und Orientierungen jedes magnetischen Objekts dieses Geräts, die anhand der vorhergehenden Iterationen des Schrittes b) erhalten worden sind, zu detektieren und in Reaktion auf die Detektion eines unbeweglichen Geräts dieses Gerät und die letzte Position, die letzte Orientierung und die letzte Amplitude des magnetischen Moments jedes seiner magnetischen Objekte zu einer Liste unbeweglicher Geräte hinzuzufügen,

d) Messungen von Magnetometern zu erstellen, wenn sie in Gegenwart eines Referenzmagnetfeldes, das nur durch die magnetischen Objekte und alle unbeweglichen Geräte, die in der Liste unbeweglicher Geräte vorhanden sind, erzeugt wird, eindeutig sind, wobei dieses Referenzmagnetfeld anhand der Positionen, Orientierungen und Amplituden der magnetischen Momente der magnetischen Objekte der in der Liste unbeweglicher Geräte aufgezeichneten Geräte berechnet wird, und

e) die Amplitude einer Störung anhand der Abstände zwischen den Messungen, die im Schritt a) ausgeführt werden, und den Messungen, die im Schritt d) erstellt werden, zu berechnen und

- falls die Amplitude der Störung einen vorgegebenen Schwellenwert überschreitet, den Schritt b) auszuführen, andernfalls die Ausführung des Schrittes b) wegzulassen und zum Schritt a) zurückzukehren, ohne dass der Schritt b) ausgeführt worden ist.

**Claims**

1. Method for locating mobile utensils presented before a network of magnetometers having N triaxial magnetometers ($M_{ij}$) mechanically connected to one another without any degree of freedom in order to preserve a known distance between each of the magnetometers, where N is an integer greater than or equal to five, each utensil having at least one magnetic object and one or more utensils being able to be moved directly manually by a human being while the other utensils remain immobile, said method involving:

a) the measurement (100), by each of the magnetometers, of the amplitude of the magnetic field along each of its measurement axes,

b) the estimation (150), on the basis of the measurements from the magnetometers, of the values of a plurality of variables by resolving a current system of equations connecting said variables to each measurement from a triaxial magnetometer of the network, said variables corresponding to the positions, orientations and amplitudes of the magnetic moments of the magnetic objects of the utensils to be located, a utensil being located as soon as the position and orientation of the magnetic moment of each magnetic object of said utensil have been estimated,

- the iteration of steps a) and b) at successive instants in time in order to obtain the estimated values of each variable at said various successive instants,

**characterized in that** the method involves:

c) the detection (160) of each immobile utensil on the basis of the positions and orientations of each magnetic object of said utensil that are obtained at the end of previous iterations of step b), and in response to the detection of an immobile utensil, the addition of said utensil and of the last position, orientation and amplitude of the magnetic moment of each of its magnetic objects to a list of immobile utensils,

d) the establishment (106) of the measurements from the magnetometers when they are exclusively in the presence of a reference magnetic field generated only by the magnetic objects of all the immobile utensils that are present in the list of immobile utensils, said reference magnetic field being calculated on the basis of the positions, orientations and amplitudes of the magnetic moments of the magnetic objects of the utensils recorded in the list of immobile utensils, and

e) the calculation (108) of the amplitude of a disturbance on the basis of the differences between the measurements performed in step a) and the measurements established in step d), and

- if the amplitude of the disturbance crosses a predetermined threshold, step b) is executed, otherwise the execution of step b) is omitted and the method returns to step a) without having executed step b).

2. Method according to Claim 1, in which if the amplitude of the disturbance crosses a predetermined threshold, the method involves the identification of the utensil that has been moved among the utensils that the list of immobile utensils contains, said list of immobile utensils containing, for each magnetic object of each immobile utensil: its position, its orientation and the amplitude of its magnetic moment, said identification of the utensil involving:

- the calculation (120) of the barycentre of the disturbance, said barycentre being the barycentre of the positions of the various magnetometers of the network, in which the position of each magnetometer is weighted by the difference between the measurements performed by said magnetometer in step a) and the measurements established for said magnetometer in step d), and
- the selection (130), from the list of immobile utensils, of the utensil whose magnetic objects are closest to said barycentre, the utensil selected in this manner being the identified utensil.

3. Method according to Claim 2, in which if the distance that separates the utensil closest to the barycentre is above a predetermined threshold, then the method involves:

- the addition (142), to the current system of equations, of at least one new equation connecting new variables coding the position, the orientation and the amplitude of the magnetic moment of each magnetic object of a new utensil to each measurement from a triaxial magnetometer of the network, in order to obtain a new system of equations, then
- the use of said new system of equations instead of the current system of equations for the subsequent iterations of steps a) and b), the new system of equations thus becoming, for the subsequent iterations of steps a) and b), the current system of equations.

4. Method according to Claim 1, in which if the amplitude of the disturbance crosses a predetermined threshold, the method involves the identification (180) of the utensil that has been moved among the utensils that the list of immobile utensils contains, said list of immobile utensils containing, for each magnetic object of each immobile utensil: its position, its orientation and the amplitude of its magnetic moment, said identification of the utensil involving:

e) the estimation (182) of the magnetic field measured by each magnetometer in the presence of a single immobile utensil and in the absence of any other utensil, on the basis of the position, the orientation and the amplitude of the magnetic moment of each magnetic object of said immobile utensil, which are recorded in the list of immobile utensils,
f) the calculation (184) of a correlation between the measurements estimated in step e) and the differences between the measurements performed by the magnetometers in step a) and the measurement established for these very magnetometers in step d), and
g) the selection (186), from the list of immobile utensils, of the one that has the magnetic object(s) that exhibit(s) the highest correlation, calculated in step f), the utensil selected in this manner being the identified utensil.

5. Method according to Claim 4, in which if the highest correlation is below a predetermined threshold, then the method involves:

- the addition (142), to the current system of equations, of at least one new equation connecting new variables coding the position, the orientation and the amplitude of the magnetic moment of each magnetic object of a new utensil to each measurement from a triaxial magnetometer of the network, in order to obtain a new system of equations, then
- the use of said new system of equations instead of the current system of equations for the subsequent iterations of steps a) and b), the new system of equations thus becoming, for the subsequent iterations of steps a) and b), the current system of equations.

6. Method according to Claim 2 or 4, in which the method involves, in response to the detection (160) of an immobile utensil and the addition of said utensil to the list of immobile utensils, the replacement (166), in the current system of equations, of the variables coding the position, the orientation and the amplitude of the magnetic moment of each magnetic object of said utensil with constant numerical values that are equal to the current position, the current orientation and the current amplitude of the magnetic moment of each magnetic object of said utensil in order to obtain a new system of equations in which the number of variables whose value needs to be estimated is smaller than in the current system of equations, then

- the use of the new system of equations instead of the current system of equations for the subsequent iterations of steps a) and b), the new system of equations thus becoming, for the subsequent iterations of steps a) and b), the current system of equations, then
- in response to the identification of said utensil during a subsequent iteration of the step of identification of the utensil that has been moved, the replacement (140), in the current system of equations, of the constant numerical values coding the position and the orientation of each magnetic object of said utensil with variables in order to obtain a new system of equations in which the number of variables whose value needs to be estimated is larger than in the current system of equations and the use of the new system of equations instead of the current system of equations for the subsequent iterations of steps a) and b).

7.  Method according to any one of the preceding claims, in which the method involves the elimination (176), from the current system of equations, of the variables coding the position, the orientation and the amplitude of the magnetic moment of each magnetic object of a utensil if the distance estimated between said utensil and the network of magnetometers exceeds a predetermined threshold in order to obtain a new system of equations, then the use of said new system of equations instead of the current system of equations for the subsequent iterations of steps a) and b), the new system of equations thus becoming, for the subsequent iterations of steps a) and b), the current system of equations.

8.  Information recording medium, **characterized in that** it has instructions configured for the execution of a method according to any one of the preceding claims when said instructions are executed by an electronic computer.

9.  Device for locating mobile utensils, each utensil having at least one magnetic object and one or more utensils being able to be moved directly manually by a human being while the other utensils remain immobile, said device having:

    - a network of magnetometers having N triaxial magnetometers ($M_{ij}$) mechanically connected to one another without any degree of freedom in order to preserve a known distance between each of the magnetometers, where N is an integer greater than or equal to five,
    - a processing unit (30) programmed to:

        a) acquire the measurement, by each of the magnetometers, of the amplitude of the magnetic field along each of its measurement axes,
        b) estimate, on the basis of the measurements acquired from the magnetometers, values of a plurality of variables by resolving a current system of equations connecting said variables to each measurement from a triaxial magnetometer of the network, said variables corresponding to the positions, orientations and amplitudes of the magnetic moments of the magnetic objects of the utensils to be located, a utensil being located as soon as the position and orientation of the magnetic moment of each magnetic object of said utensil have been estimated,

    - iterate steps a) and b) at successive instants in time in order to obtain the estimated values of each variable at said various successive instants,
    **characterized in that** the processing unit (30) is likewise programmed to:

        c) detect each immobile utensil on the basis of the positions and orientations of each magnetic object of said utensil that are obtained at the end of previous iterations of step b), and, in response to the detection of an immobile utensil, add said utensil and the last position, orientation and amplitude of the magnetic moment of each of its magnetic objects to a list of immobile utensils,
        d) establish measurements from the magnetometers when they are exclusively in the presence of a reference magnetic field generated only by the magnetic objects of all the immobile utensils that are present in the list of immobile utensils, said reference magnetic field being calculated on the basis of the positions, orientations and amplitudes of the magnetic moments of the magnetic objects of the utensils recorded in the list of immobile utensils, and
        e) calculate the amplitude of a disturbance on the basis of the differences between the measurements performed in step a) and the measurements established in step d), and

    - if the amplitude of the disturbance crosses a predetermined threshold, execute step b), otherwise omit the execution of step b) and return to step a) without having executed step b).

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2988862
- FR 2988874
- US 7932718 B1
- US 5731996 A
- US 2012249634 A1
- US 6263230 B1
- US 6269324 B
- US 2002171427 A1